# EUROPEAN PATENT APPLICATION

(11) **EP 3 985 775 A1**
(43) Date of publication of application: **20.04.2022**
(21) Application number: 21179646.1
(22) Date of filing: 15.06.2021
(51) Int. Cl.: H01M 10/0567, H01M 10/0568, H01M 10/0569, H01M 10/054, H01M 4/58, H01M 4/587, H01M 50/417, H01M 50/429

(54) **ELECTROLYTE FOR NA-ION BATTERY**

(30) Priority: 16.10.2020 FR 2010674
(71) Applicant: Tiamat SAS, 80000 Amiens (FR)
(72) Inventor: Moog, Iona, 38340 Voreppe (FR); Rolland, Julien, 33160 Saint Médard-en-Jalles (FR)
(74) Representative: Touroude & Associates

(57) **Abstract**

The present invention concerns A non-aqueous electrolyte comprising :
(a) at least one sodium salt,
(b) at least two C₃-C₆ alkyl carbonate solvents,
(c) at least two additives chosen from:
- a C₂-C₆ alkylene carbonate,
- a C₁-C₈ nitrile.

and cells or batteries comprising such an electrolyte.

## Description

### FIELD OF THE INVENTION

The present invention is in the field of batteries and more precisely it relates to a non-aqueous electrolyte composition, a Na-ion electrochemical cell containing said electrolyte and a secondary battery containing said electrolyte.

### BACKGROUND OF THE INVENTION

Na-ion batteries represent an alternative to current Li-ion batteries and are very close in terms of operability.

A Na-ion cell is made of two electrodes: a negative and a positive electrode separated by a polymer-based separator. A liquid, called the electrolyte, wets the separator and electrodes. Upon use (discharge), sodium ions Na+ are deintercalated from the active material of the negative electrode, travel through the electrolyte/separator before they are finally intercalated into the active materials of the positive electrode. In order to retain electroneutrality, electrons travel from the negative to the positive materials through the external circuit. The electrolyte is thus the media of transport of the cations from one electrode to the other. As such, it is ionically conductive but electronically insulating.

The electrolyte is composed of different solvents, several additives and a sodium salt. The choice of these components is critical as, along with the active materials, it will command the performance of the cells. The ideal electrolyte should present high ionic conductivity, good electrochemical and thermal stability and the ability to effectively passivate the surface of the electrodes and form the so-called SEI (solid electrolyte interphase) at the negative and CEI (cathode electrolyte interphase) at the positive electrode. Moreover, its components must be readily available, easily produced and environmentally benign.

In Li-ion cells, the electrolyte is very often made of 1M LiPF6 in a mixt of cyclic and linear carbonates. Typical examples of cyclic carbonates are DMC dimethyl carbonate and linear are EC ethylene carbonate. Many additives are used industrially. Their primary task is to improve the performances of the cells and most importantly 1) to increase their longevity, 2) to decrease their impedance and 3) to mitigate the effect of storage on the capacity, also called calendared ageing. To do that, they synergistically decompose/react over the first few cycles of the so-called formation step during the manufacturing process creating the SEI and CEI. These layers allow for rapid des/intercalation of cations while maintaining a high electronic conductivity and preventing degradation of the electrolyte from reduction/oxidation.

While many additives and their effects are known in the field of Li-ion batteries, the state of the art is much scarcer in the case of Na-ion. Several salts based on Na are used: NaPF6, which is by far the most usual, NaOCl4 that offers the advantage of being F-free, an asset in the recycling step of the cells but with higher safety issues, and NaBF4 which is thermally more stable but shows limitations in terms of solubility in most solvents. Another potential candidate is NaFSI as presented in JP6592380B2 for improved heat resistance. Similar solvents to Li-ion electrolyte composed of cyclic and linear carbonate are used on Na-ion cells. However, the different active materials, potentials and overall chemistry lead to different preferred ratio between cyclic and linear as demonstrated in "Electrolytes and Interphases in Sodium-Based Rechargeable Batteries: Recent Advances and Perspectives" (Eshetu et al., Adv. Energy Mater. 2020, 10, 2000093) or in "Electrochemical Na Insertion and Solid Electrolyte Interphase for Hard-Carbon Electrodes and Application to Na-lon Batteries" (Komaba et al.; Adv. Functional Mater. 2011, Vol. 21, Iss. 20, P3859-3867). The concentration of salt in the electrolyte varies from 0,5M as is presented in WO2019/116044A1 to 3M as is presented in "fluorinated Ethylene carbonate as Electrolyte Additive for Rechargeable Na Batteries" (Komaba et al, ACS Appl. Mater. Interfaces 2011, 3, 11).

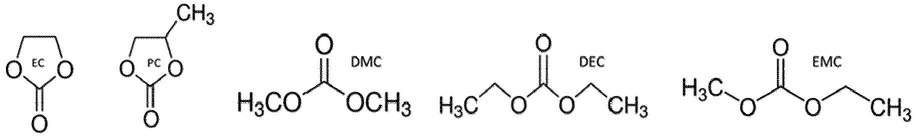

During the few first formation cycles, the cell encounters chemical reactions that will ensure its functioning in optimal conditions and acceptable cycle life. Na reduction vs. SHE is -2.71V which is 330 mV higher than Li (-3.04V). It means that electrolyte stability is even more critical at high potential vs. SHE and that the degradation products of the SEI, still mostly unknown, may vary also because of this variation in potential.

In Na-ion cells, the negative electrode is made of hard carbons, so-described because of their physical properties. The negative electrode material of choice in Li-ion is graphite. The properties of the graphite and hard carbon, especially their surface, differs greatly. Indeed, graphite is commonly described as a parallel stacking of sheets of 6-C rings arranged in a hexagonal structure. Hard carbon, on the other hand, is a non-graphitizable carbon: it means that no matter the process and more particularly the heat treatment temperature, graphite will never be obtained from the hard carbon. There is no periodic stacking of graphene layers and the structure can be described as randomly distributed turbostratic domains made of graphene layers of variable interlayer spacing separated by amorphous area and micropores. The active surface area, where the SEI is formed greatly differs between hard carbon and graphite. The notion of ASA regroups stacking defaults for graphite which means highly reactive sites. Basal and edge plane reactivity is different and different thicknesses of the SEI are reported when considering the site at which the SEI is formed; see "The importance of the active surface area of graphite materials in the first lithium intercalation" (Journal of Power Sources, vol. 174, I. 2 - 2007, pp 1082-1085).

Moreover, different surface groups have been reported at edge sites where solvent intercalation happens. Hard carbon surface structure is believed to be different to graphite. Therefore, the reactivity of the hard carbon structure is likely to differ greatly compared to graphite, especially during the formation step.

Because of the different active materials between Lithium ion and Sodium ion cells, the SEI and CEI formation mechanisms are different as is the additive mixt used in the electrolyte. Na storage within the structure therefore differs greatly from Lithium storage intercalation, especially in the negative active material.

Such key differences between Li-ion and Na-ion means that the strategies towards the best compositions of electrolyte are different and that the state of the art does not fully answer successfully the different challenges arising from the use of Na-ion cells.

Moreover, self-discharge is commonly known to worsen by higher than room temperatures. Self-discharge is the behaviour of a cell undergoing discharge without any external solicitation. Although EP17306373A and EP2019066061 aim to also solve self-discharge, both solutions have their drawbacks such as limited compatibilities with commercial separator for the former and limited commercial availability of one of the additives, NaDFOB and a gassing phenomenon encountered upon cycling for the latter

### DISCLOSURE

### Technical Problem

The aim of this invention is to provide improved sodium ion electrolyte compositions for Na-ion cells. Especially, it targets improved cycle life and reduced self-discharge, in particular at temperatures above 50°C.

The present invention also aims to 1) reduce self-discharge for the cell 2) at competitive prices with 3) solutions readily available on the market.

### Technical Solution

The present invention consists of providing a novel electrolyte composition that includes a particular combination of sodium salts, solvents and additives as described below.

The subject matter of the present invention thus concerns a non-aqueous electrolyte comprising:
(a) at least one sodium salt,
(b) at least two C₃-C₆ alkyl carbonate solvents,
(c) at least two additives chosen from:
   - a C₂-C₆ alkylene carbonate,
   - a C₁-C₈ nitrile.

The subject matter of the present invention also concerns the use of a non-aqueous electrolyte according to the present invention in a sodium secondary battery.

The subject matter of the present invention therefore concerns a secondary sodium battery comprising a non-aqueous electrolyte according to the present invention.

### Advantageous Effects

The present invention concerns an electrolyte and thus cell/battery with an improved cycle life and reduced self-discharge, in particular at temperatures above 50°C.

This enables to address the technical problem of 1) reducing self-discharge for the cell 2) at competitive prices with 3) solutions readily available on the market.

The present invention differs from the electrolyte compositions found in the prior art by using a nitrile compound. Additionally, only two additives are used. It is also different from the electrolyte of the prior art as it contains several additives that are not described. For example in WO2019116044A1 is disclosed a mixture of solvents with specific sodium salts and fluoroethylene carbonate (FEC) and vinylene carbonate (VC) as additives to be added in a concentration below 5 wt%.

The work described in CN 107171020 A and « The effects of the functional electrolyte additive on the cathode material Na0.76Ni0.3Fe0.4Mn0.3O2 for sodium-ion batteries » (Song et al. Electrochimica Acta, vol. 281, 2018 pp 370-377 - referred to as « Song et al. ») use adiponitrile additives. However, they are coupled to FEC-based additives and their priority action is related to the formation of a CEI. They aim at improving gas generation at first cycle during the formation and at improving the overall cyclability and C-rate performances. According to Song et al., while FEC acts positively on the negative electrode, the adiponitrile (ADPN) has a beneficial effect onto the positive active material a lamellar oxide.

The present invention concerns a synergetic effect between the two additives (see Examples: Example B shows clearly that using only one of the two additives gives limited results in terms of self-discharge and polarisation, whereas when both are used at appropriate ratio, a synergetic effect leads to improved overall performances ; using FEC-based additives, on the other hand, have only limited success and give lesser performances).

### DEFINITIONS

The following acronyms will be used throughout the description:
- EC: ethylene carbonate
- PC: propylene carbonate
- BC: butylene carbonate
- DMC: dimethyl carbonate
- DEC diethyl carbonate
- EMC: Ethyl Methyl carbonate
- VC: vinylene carbonate
- FEC: fluoroethylene carbonate
- SEI solid electrolyte interphase
- CEI cathode electrolyte interphase
- PVDF: Polyfluorure de vinylidene
- CMC: carboxymethyl cellulose
- PAA: polyacrylic acid
- ADPN: adiponitrile

### DESCRIPTION OF THE DRAWINGS

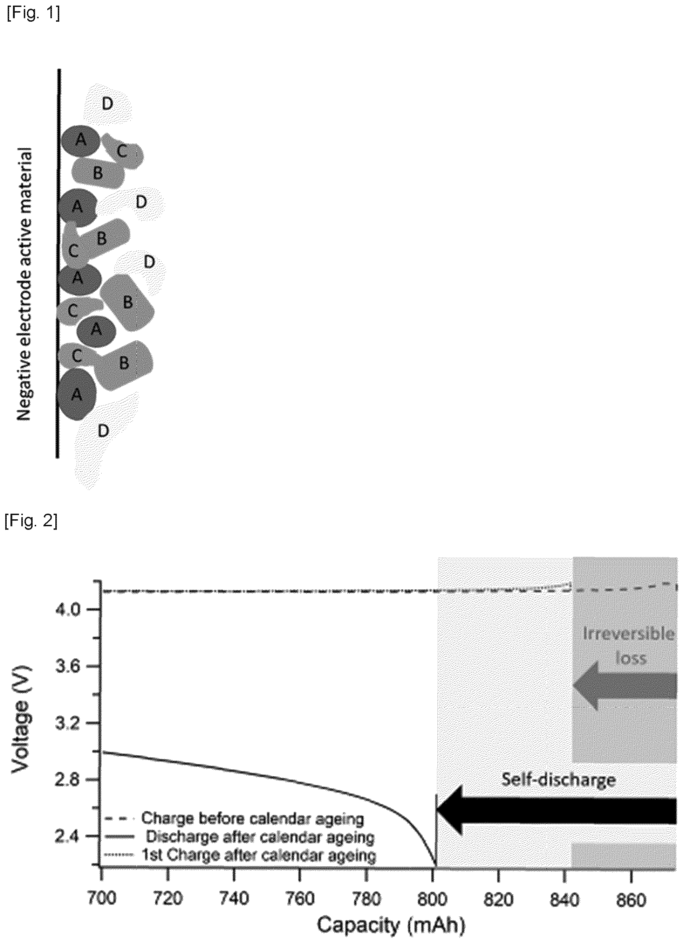

Figure 1: Illustration of an SEI with different molecules A, B, C and D created at the surface upon additives consummation and SEI formation.
Figure 2: Illustration of the self-discharge behaviour after storage at 55°C for 1 week: reversibility and irreversibility of the treatment and effect on the capacity.

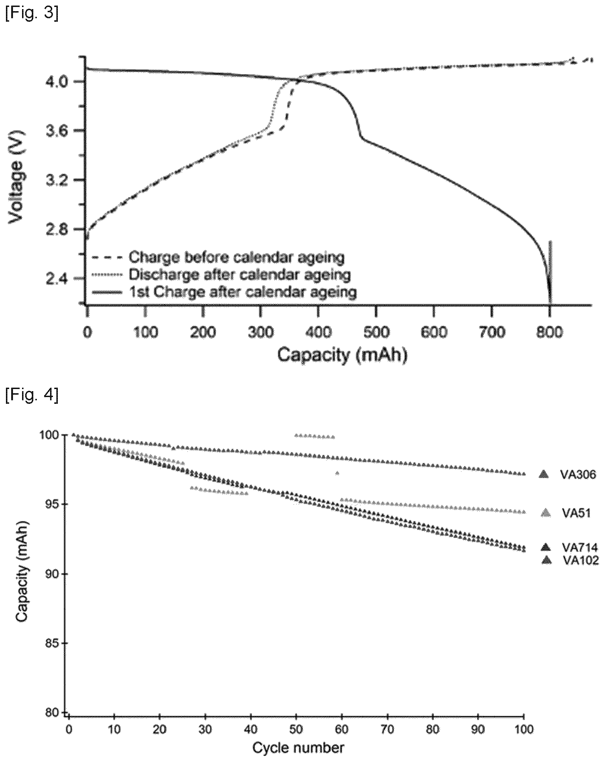

Figure 3: Galvanostatic curve of NVPF/HC cells and the effect of calendar ageing on the capacity.
Figure 4: Capacity retention after 100 cycles between 4 different electrolyte composition. The two bottom continuous lines evolving from 100 to circa 92mAh (from 0 to 100 cycles) are VA102 and VA714. The top continuous line evolving from 100 to 98 mAh (from 0 to 100 cycles) is VA306. The middle discontinuous line with a lower plateau at 96 mAh for 25-35 cycles, a high plateau at 100 mAh for 40-60 cycles and ending at 95 mAh, is VA51.

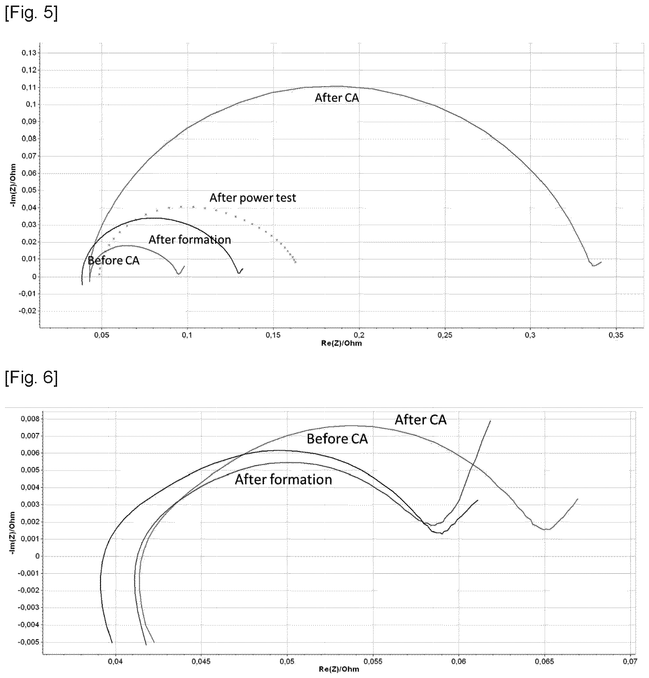

Figure 5: PEIS analysis of a cell containing the control electrolyte without additives after formation, before and after calendar ageing and after power test.
Figure 6: PEIS analysis of a cell containing the VA306 electrolyte composition, before and after calendar ageing and after power test.

### DETAILLED DESCRIPTION

### Electrolyte

In particular, the subject matter of the present invention may concern a non-aqueous electrolyte as presently disclosed, characterised in that the sodium salt is chosen from the list consisting of NaClO₄, NaPF₆, NaBF₄, NaAsF₆, sodium bis(trifluoromethylsulfonyl)imide (NaTFSI), sodium bis(fluorosulfonyl)imide (NaFSI), sodium difluoro(oxalato)borate (NaDFOB).

In one embodiment, the subject matter of the present invention may concern a non -aqueous electrolyte according to the present invention, characterised in that the C₃-C₆ alkyl carbonate solvents are cyclic C₃-C₆ alkyl carbonate solvents and/or linear C₃-C₆ alkyl carbonate.

In particular, the cyclic C₃-C₆ alkyl carbonate may be chosen from ethylene carbonate (EC), butylene carbonate (BC) or propylene carbonate (PC).

In particular, the linear C₃-C₆ alkyl carbonate may be chosen from dimethyl carbonate (DMC), diethyl carbonate (DEC) or ethyl methyl carbonate (EMC).

In one embodiment, the C₃-C₆ alkyl carbonate solvents are chosen from at least one cyclic C₃-C₆ alkyl carbonate solvent and at least one linear C₃-C₆ alkyl carbonate solvent.

In one embodiment, the C₃-C₆ alkyl carbonate solvents are chosen from the list consisting of ethylene carbonate (EC), butylene carbonate (BC), propylene carbonate (PC), dimethyl carbonate (DMC), diethyl carbonate (DEC) and ethyl methyl carbonate (EMC).

Preferably, the non-aqueous electrolyte according to the present invention, may be characterised in that the C₃-C₆ alkyl carbonate solvents are chosen from the list consisting of ethylene carbonate, propylene carbonate, dimethyl carbonate, diethyl carbonate and ethyl methyl carbonate.

The subject matter of the present invention also concerns a non-aqueous electrolyte according to the present invention, characterised in that the C₂-C₆ alkylene carbonate is a cyclic C₂-C₆ alkylene carbonate or a linear C₂-C₆ alkylene carbonate.

In one embodiment, the present invention concerns a non-aqueous electrolyte as presently described, characterised in that the C₂-C₆ alkylene carbonate is a vinylene carbonate.

Of course, it is understood that other components could be added to the electrolyte without changing the nature of the novel combination. For instance, additional cyclic or linear carbonate solvents could be added to the electrolyte composition

The subject matter of the present invention also concerns a non-aqueous electrolyte according to the present invention, characterised in that the C₁-C₈ nitrile comprises at least two nitrile moieties.

Preferably, the non-aqueous electrolyte according to the present invention, may be characterised in that the C₁-C₈ nitrile has for general formula NC-(CH)ₙ-CN with n being an integer comprised between 1 and 6, preferably 2, 3 or 4.

The subject matter of the present invention concerns a non -aqueous electrolyte according to the present invention, characterised in that the C₁-C₈ nitrile is chosen from the list consisting in adiponitrile, succinonitrile or glutaronitrile.

Preferably, the C₁-C₈ nitrile has for general formula NC-(CH)ₙ-CN in the non-aqueous electrolyte according to the present invention, is an adiponitrile (with n being 4).

The subject matter of the present invention concerns a non-aqueous electrolyte according to the present invention, characterised in that the weight concentration of C₂-C₆ alkylene carbonate is comprised between 2 and 10% of the total electrolyte weight, the C₂-C₆ alkylene carbonate having the here-above definitions.

The subject matter of the present invention concerns a non-aqueous electrolyte according to the present invention, characterised in that the weight concentration of C₁-C₈ nitrile is comprised between 0.2 and 5% of the total electrolyte weight, the C₁-C₈ nitrile having the here-above definitions.

Preferably, the subject matter of the present invention concerns a non-aqueous electrolyte according to the present invention, characterised in that the weight concentration of C₂-C₆ alkylene carbonate is comprised between 2 and 10% of the total electrolyte weight and in that the weight concentration of C₁-C₈ nitrile is comprised between 0.2 and 5% of the total electrolyte weight, the C₂-C₆ alkylene carbonate and C₁-C₈ nitrile having the here-above definitions.

### [Battery/Cell

The subject matter of the present invention concerns a sodium battery according to the present description, in particular a secondary battery.

By "battery", it is also meant "cell" in the context of the present invention, i.e. working part of a larger battery.

The subject matter of the present invention concerns a battery (e.g. secondary battery) according to the present invention, characterised in that its positive electrode comprises a binder, conductive carbon and a polyanionic compound and/or a lamellar oxide compound as positive material.

The subject matter of the present invention concerns a battery (e.g. secondary battery) according to the present invention, characterised in that its negative electrode comprises a binder, conductive carbon and a hard and soft carbon as negative material.

The subject matter of the present invention concerns a battery (e.g. secondary battery) according to the present invention, characterised in that it comprises a compatible polyolefin or cellulose-based separator.

Preferably, the subject matter of the present invention concerns a battery (e.g. secondary battery) according to the present invention characterised in that is comprises:
- an electrolyte according to the present invention,
- its positive electrode comprises a binder, conductive carbon and a polyanionic compound and/or a lamellar oxide compound as positive material,
- its negative electrode comprises a binder, conductive carbon and a hard and soft carbon as negative material, and
- it comprises a compatible polyolefin or cellulose-based separator

The negative material can be any carbon that comports amorphous and graphitic domains with different ratios. It includes soft and hard carbons Hard carbon and soft carbon electrodes are well known in the art. Hard carbon is a solid form of carbon that cannot be converted to graphite by heat treatment, in contrast to soft carbon. While hard carbons do not see their structure transform into graphite upon subsequent heat treatment, such is not the case for soft carbons. Therefore, the amorphous domain of soft carbons would reorganise into graphitic planes upon heat treatment. Soft carbon thus represents the graphitizable nongraphitic carbon with a higher electronic conductivity, whose graphitization degrees and interlayer distance can be tuned by a thermal treatment.

Soft carbon electrodes may for example comprise pitch-derived soft carbon, carbon black, mesitylene-derived spherical carbon, or heteroatom-doped partially carbonized aromatic hydrocarbons.

The negative material could be any mixture between hard and soft carbons and could be post treated either with heat treatment or with a chemical treatment using either acidic or alkaline media.

This electrolyte is used in a Na-ion cell: a negative electrode consisting in the active negative materials such as Hard carbon, a binder such as CMC or PVDF and a conductive carbon. This electrode is supported on an aluminium foil. The positive electrode consists of a positive active material of the family of the polyanionic, including, but not limited to NaxM(PO4)yFz with M being a metal or a mixture of metals, and x= 2 to 4, y = 2 to 4 and z= 0 to 3 or so-called lamelar oxides of the formula NaMO2 with M being a metal or a mixture of metals, a binder such as CMC or PVDF and a conductive carbon. This electrode is supported on an aluminium foil. The separator, a polyolefin or cellulose-based membrane acts as a barrier between the negative and positive electrodes and is electronically isolating albeit ionically conducting. The electrolyte presented herein wets the electrodes and separator.

The negative material can be any carbon that comports amorphous and graphitic domains with different ratios. It includes soft and hard carbons. While hard carbons do not see their structure transform into graphite upon subsequent heat treatment, such is not the case for soft carbons. Indeed, the amorphous domain of soft carbons would reorganise into graphitic planes upon heat treatment. The negative material could be any mixture between hard and soft carbons and could be post treated either with heat treatment or with a chemical treatment using either acidic or alkaline media.

The positive material includes either oxide materials of the form NaMₓO_{y} with x being comprised between 1 to 2 and y being comprised between 2 to 3. Other materials with a substitution of Oxygen by any other elements are also included, such as F (Oy-zFz). Polyanionics materials are also included such as, but not limited to, sulfates of the form NaqMx(SO4)y with q being comprised between 1 to 4, M is a metal, x and y being comprised between 1 to 4, for example Na₂Fe(SO₄)₂, phosphates of the form or any substituted structure suchs as Na₃V₂(PO₄)2F₃. It could also include silicates of the form NaqMx(SiO₄)y with q being comprised between 1 to 4 and x being comprised between 1 to 2 and y being comprised between 1 to 4, M being a metal, such as Na₂FeSIO₄ for example.

The electrodes, both negative and positive are coated onto aluminium foil of thicknesses from 5 to 40 microns. The aluminium has been, or not, treated chemically or with a specific coating such as Carbon-coating. This latest step would affect the adhesion of the electrode materials and would therefore be taken into consideration when doing the formulation and coating of the ink unto the collector.

The ink or slurry is made of four main components:
a. the active materials (either positive or negative and described before)
b. a conductive carbon that ensures electronic conductivity which is basically any carbon presented electronic conductivity behaviour such as, but not limited to nanoparticles of carbons, carbon black, graphite, etc. It is also possible to have a combination of conductive carbons with one or more mixed together.
c. a binder or more than 1 which is a polymer that ensures the mechanical integrity of the electrode. The binder is either compatible with aqueous solution such as CMC or PAA. When CMC is used, SBr is usually added. This list is not limited. Other binders such as PVDF can also be used in combination with organic solvents.
d. A solvent or liquid media such as water (aqueous slurry) or organic (ethanol, NMP, etc.) that will ensure that a, b and c are mixed together homogeneously and that the ink can be readily used and coated using different coating methods such as slot die or coma coaters. The viscosity of such a solution is carefully controlled through the dry mass ratio. The dry mass ratio is defined as m(all powders/solids)/m(total) where the total mass is the mass of all solids as well as the mass of all liquids.

The list of active materials, binders and conductive carbons and separators is not exhaustive and can be extended to other materials described in the state of the art.

The here-under examples further illustrate the present invention. The present invention is however not to be considered as solely limited to these examples.

### EXAMPLES

### Example A: preparation of the electrolytes and cells/batteries

The electrolyte compositions were prepared using the following procedure: in a dry room with a dew point below - 50°C, the appropriate amount of solvent, Na salt and additives were carefully weighted. The solvents were mixed with the Na salt in the appropriate ratios and stirred magnetically at room temperature until no visible powder remains or until 15 minutes. The correct weight of additives was then added to the solution and stirred again until complete dispersion.

The following table summarises the different compositions tested:

### [Table 1]

**Table 1 : identification of the cells and their compositions**

| ID | Additive 1: VC (wt. %) | Additive 2: FEC (wt.%) | Additive 3: ADPN (wt.%) |
|---|---|---|---|
| TG4-191121-1-34 Ctrl | / | / | / |
| TG4-191121-1-28 Ctrl | / | / | / |
| TG4-191118-2-6_VA306 | 3 | / | 0.6 |
| VA51 | 5 | / | 1 |
| VA714 | 7 | / | 1.4 |
| VA102 | 10 | / | 2 |
| TG4-191121-1-20_V3 | 3 | / | / |
| TG4-191121-1-27_V3 | 3 | / | / |
| TG4N-200121-1-35_A03 | / | / | 0.3 |
| TG4-191202-1-23_A03 | / | / | 0.3 |
| TG4-191202-1-23_A06 | / | / | 0.6 |
| TG4N-200121-1-25_A12 | / | / | 1.2 |
| TG4-191202-1-11_A12 | / | / | 1.2 |
| TG4-191202-1-40_FA106 | / | 1 | 0.6 |
| TG4N-200121-1-1_FA106 | / | 1 | 0.6 |
| TG4N-200121-1-4_FA206 | / | 2 | 0.6 |
| TG4N-200121-1-21_FA306 | / | 3 | 0.6 |

The solvent used was made of 50:50 weight.% EC/DMC with 1M NaPF6.

The electrolyte compositions were tested in full 18650 cylindrical cells with NVPF vs. HC used respectively as positive and negative active materials. Slurries were made with the active materials, a binder and a conductive carbon and casted onto an aluminium foil. After drying, the electrodes were winded together, separated by a polyolefin separator and welded unto a stainless steel can (negative electrode) and the corresponding cap (positive electrode). The cell was dried and filled with the electrolyte in a dry air room with a dewpoint below -50°. The water content in all electrolytes was measured by Karl Fischer titration and found to be below 30 ppm. The electrode capacity ratio between the negative and positive active materials was greater than 1.1 in order to avoid Na-plating.

The cells then underwent a so-called formation step where they were submitted to specific charge and discharge treatments in order to ensure the most optimised SEI/CEI formation.

Electrochemical impedance spectroscopy was carried out in a potentiostatic mode at 45°C on a Biologic BCS 815. The impedance spectra were recorded in a frequency range between 100 kHz and 100 mHz with an amplitude voltage of 8 mV. The 18650 cells have been charged up to 4.20 V corresponding to 100 % of the state of charge and then stabilized at the open-circuit voltage (OCV) 30 min prior to any impedance measurements. The medium frequency ranges commonly between 1 kHz and 1 Hz is fitted by using the well-known Randles circuit model. This range is mainly attributed to the SEI and the CEI resistance where additives are expected to modify those interfaces.

Galvanostatic cycling and self-discharge routine testing were carried out on a Biologic 815. Irreversible losses were determined as the ratio between the capacity of the first discharge over the first charge. The self-discharge was calculated as the losses in capacities before and after storage at 55 °C for 1 week. Some of these losses were reversible but due to some parasitic reactions, some losses were irreversible and could not be recovered with subsequent cycling. The polarisation is defined as the difference of voltage between 1C capacity vs. voltage charge curve and the 5D discharge curve and expressed in mV was calculated during a 1C/5D test. 1C is equivalent of a 1h-charge while 5D corresponds to a 12 min discharge. This means the discharge currents are 5 times higher than the charge currents. Finally, the capacity retention was calculated at the end of the following testing procedure carried out at 55°C.

**Example B:** Synergetic effect of ADPN and VC and comparison with an additive-free solution (TG4-191121-1-34_Ctrl)

All cells were prepared and tested according to the procedures presented before. In this series of tests, 4 configurations were evaluated. ADPN-only, VC-only and ADPN+VC electrolytes were studied and compared to a control with no additives. For all electrolytes, the solvents mixt was made of EC:DMC 50:50 by weight and 1M NaPF6.

### The table below summarises the key findings after testing

### [Table 2]

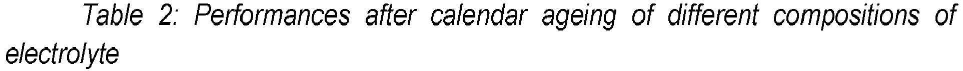

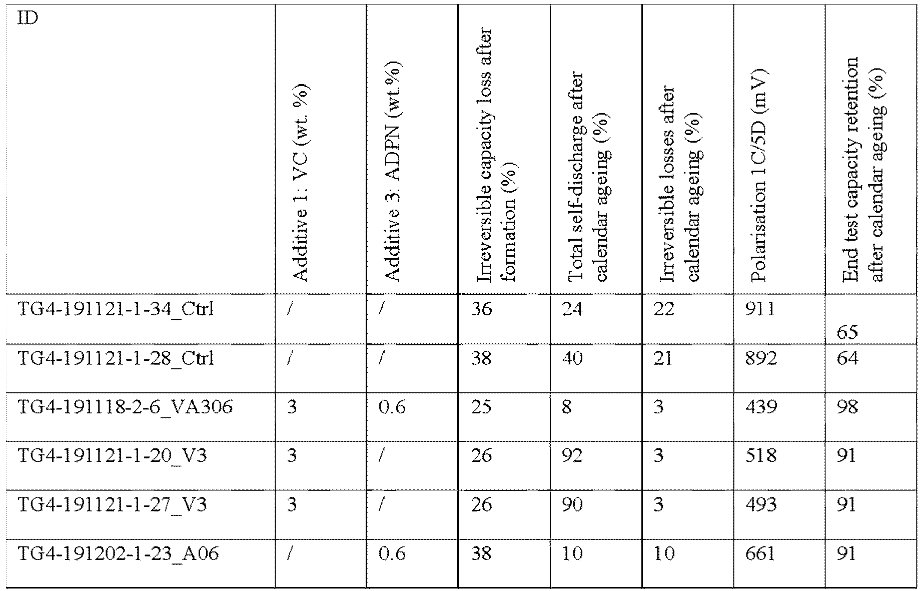

Table 2 clearly shows that of all the results presented, the EC/DMC with both ADPN and VC show the best behaviour. It presents the best values for all the different indicators. While the irreversible losses at first cycle are the lowest, the polarisation and self-discharge, both reversible and irreversible, are also the lowest. The capacity retention after the tests is also the highest. When VC-only or ADPN-only based electrolytes at the same ratio were tested, it was showed that the results were sensibly worst with higher irreversible losses at first cycle and after calendar ageing for ADPN-only and higher reversible self-discharge for VC-only. The polarisation was also higher for all those examples.

### Example C: Varying ADPN ratio as sole additive and effect

### [Table 3]

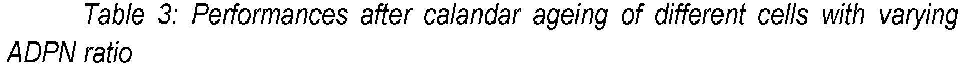

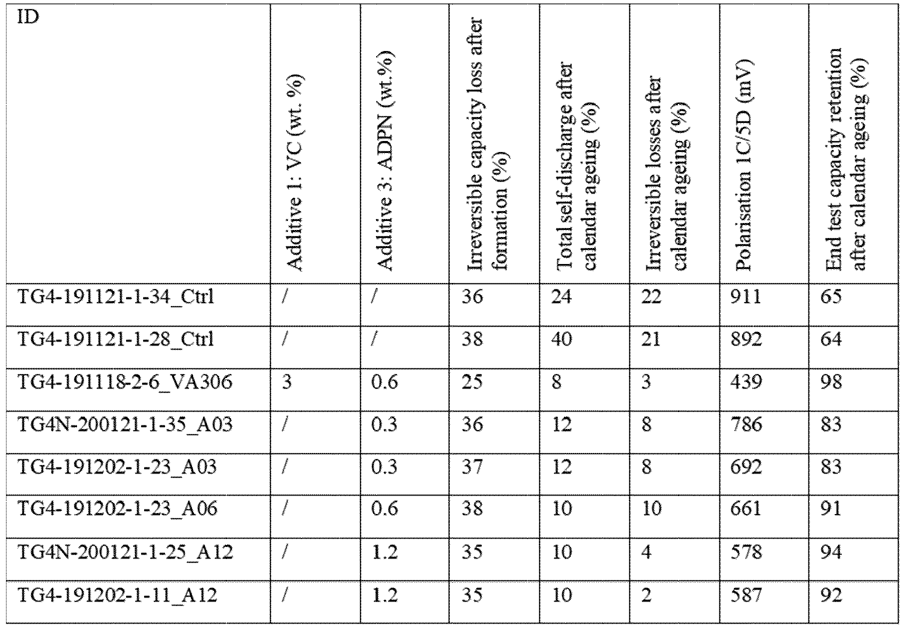

In this series, the concentration of ADPN was increased from 0.3 to 1.2 wt.% in the electrolyte. ADPN was the sole additive. The irreversible capacities decrease with increased ADPN content as do the reversible self-discharge and the polarisation. The capacity retention, on the other hand, increases with increased ADPN content. This indicates a beneficial effect of the ADPN content. However, the results are still inferior to the VA solution, with respect to the irreversible capacity at first cycle and the capacity retention.

### Example D: Impact of concentration of VC/ADPN at constant ratio - Optimum VA concentration for improved self-discharge

A range of additives comprised between 10 % and 3 % of VC with the corresponding amount of ADPN. The amount of ADPN has been adapted to keep a VC/ADPN ratio constant in each solution tested. The compositions of the formulations are described in Table 1. The testing carried out differs slightly.

Only a small concentration of 3 % VC and 0.6 % ADPN is sufficient to efficiently passivate both electrodes. It results thus in a lower capacity fade as demonstrated by the capacity retention at 100 cycles. Increasing the concentration is detrimental for the battery operation and becomes even worse above 7 % of VC and 1.4 % of ADPN. Higher concentration promotes the formation of thicker and resistive interfaces. The mechanical integrity of those interfaces is more likely weaker and subjected to cracks and redissolution under cycling. The resulting naked/unpassivated surfaces are prompt to react with fresh electrolyte and thus leading to parasitic reaction and more rapid fading.

### [Table 4]

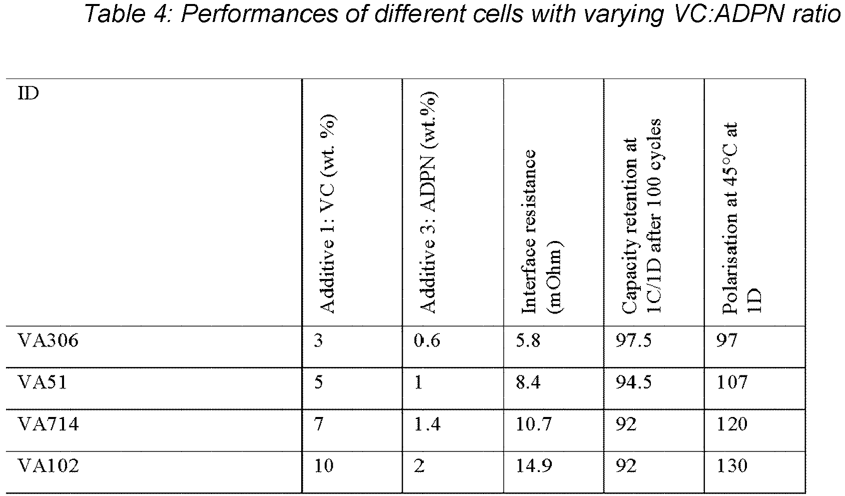

Polarisation increases along with the interface resistances in mOhm with increased additives concentrations. This is in line with a thickening of the SEI that is ultimately detrimental to the cell and as is presented in figure to the capacity retentions.

### Example E:

All cells were prepared and tested according to the procedures presented before. In this series of tests, the use of FEC instead of VC was considered at 3 different ratios close to example A.

### [Table 5]

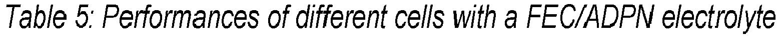

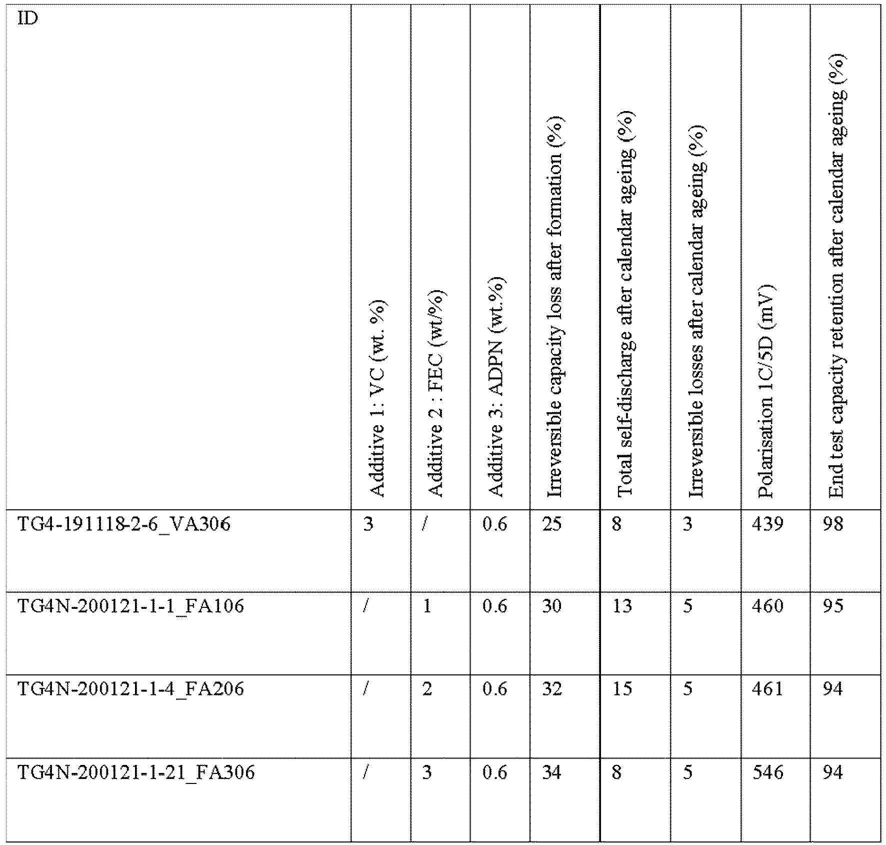

The Table shows the results obtained at ADPN concentration constant but changing FEC concentration. Those results are compared with the best compositions of VC/ADPN. The concentrations for FEC have purposely been chosen so that it is close to the optimum ratio of example B and close to the experiments carried out in Song et al.

It can be clearly seen that increasing amounts of FEC increases the irreversible capacity losses after formation. All values for the FEC series are higher than the VC/ADPN couple apart from the capacity retention that is lower. Clearly, using VC has a more beneficial effect than FEC.

## Claims

1. A non-aqueous electrolyte comprising:
(a) at least one sodium salt,
(b) at least two C₃-C₆ alkyl carbonate solvents,
(c) at least two additives chosen from:
- a C₂-C₆ alkylene carbonate,
- a C₁-C₈ nitrile.

2. Non-aqueous electrolyte according to claim 1, **characterised in that** the sodium salt is chosen from the list consisting of NaClO4, NaPF6, NaBF4, NaAsF6, sodium bis(trifluoromethylsulfonyl)imide (NaTFSI), sodium bis(fluorosulfonyl)imide (NaFSI), sodium difluoro(oxalato)borate (NaDFOB).

3. Non-aqueous electrolyte according to claim 1 or 2, **characterised in that** the C₃-C₆ alkyl carbonate solvents are cyclic C₃-C₆ alkyl carbonate solvents and/or linear C₃-C₆ alkyl carbonate.

4. Non-aqueous electrolyte according to any one of claims 1 to 3, **characterised in that** the C₃-C₆ alkyl carbonate solvents are chosen from the list consisting of ethylene carbonate, propylene carbonate, dimethyl carbonate, diethyl carbonate and ethyl methyl carbonate.

5. Non-aqueous electrolyte according to any one of claims 1 to 4, **characterised in that** the C₂-C₆ alkylene carbonate is a vinylene carbonate.

6. Non-aqueous electrolyte according to any one of claims 1 to 5, **characterised in that** the C₁-C₈ nitrile comprises at least two nitrile moieties.

7. Non-aqueous electrolyte according to any one of claims 1 to 6, **characterised in that** the C₁-C₈ nitrile has for general formula NC-(CH)ₙ-CN with n being an integer comprised between 1 and 6, preferably 2, 3 or 4.

8. Non-aqueous electrolyte according to any one of claims 1 to 7, **characterised in that** the C₁-C₈ nitrile is chosen from the list consisting in adiponitrile, succinonitrile or glutaronitrile, preferably adiponitrile.

9. Non-aqueous electrolyte according to any one of claims 1 to 8, **characterised in that** the weight concentration of C₂-C₆ alkylene carbonate is comprised between 2 and 10% of the total electrolyte weight and/or the weight concentration of C₁-C₈ nitrile is comprised between 0.2 and 5% of the total electrolyte weight.

10. Use of a non-aqueous electrolyte according to any one of claims 1 to 9 in a sodium secondary battery.

11. Sodium battery comprising a non-aqueous electrolyte according to any one of claims 1 to 9.

12. Sodium Secondary battery according to claim 11, **characterised in that** its positive electrode comprises a binder, conductive carbon and a polyanionic compound and/or a lamellar oxide compound as positive material.

13. Sodium battery according to claim 11 or 12, **characterised in that** its negative electrode comprises a binder, conductive carbon and a hard and soft carbon as negative material.

14. Sodium battery according to any one of claims 11 to 13, **characterised in that** it comprises a compatible polyolefin or cellulose-based separator.

15. Sodium battery according to any one of claims 11 to 14, **characterised in that** it is a secondary battery.
